# EUROPEAN PATENT SPECIFICATION

(11) **EP 0 313 331 B1**
(45) Date of publication and mention of the grant of the patent: **02.02.1994**
(21) Application number: 88309805.5
(22) Date of filing: 19.10.1988
(51) Int. Cl.: G09G 3/36, H04N 3/12, G09G 3/12, G09G 3/18, G09G 3/30

(54) **Real time method and apparatus for adjusting contrast ratio of liquid crystal displays**
Echtzeit-Verfahren und -Einrichtung zum Einstellen des Kontrastverhältnisses von Flüssigkristallanzeigen
Méthode et dispositif de réglage en temps réel de rapport de contraste de dispositifs d'affichage à cristaux liquides

(30) Priority: 23.10.1987 US 113034
(43) Date of publication of application: 26.04.1989
(73) Proprietor: ROCKWELL INTERNATIONAL CORPORATION, Richardson Texas 75081 (US)
(72) Inventor: Strathman, Lyle R., Cedar Rapids Iowa 52403 (US); Harwood, Craig E., Cedar Rapids Iowa 52403 (US)
(74) Representative: Jackson, David Spence

(56) References cited:
- FR-A- 2 557 339
- FR-A- 2 585 163
- PATENT ABSTRACTS OF JAPAN, vol. 9, no. 62 (P-342), 19th March 1985;& JP-A-59 195 627 (OLYMPUS KOGAKU KOGYO K.K.) 06-11-1984

## Description

The present invention relates to display apparatus of the kind having a display panel which has a brightness versus voltage characteristic which is a function of temperature, comprising means for generating various voltages across the panel for producing a display on the panel.

In today's aviation industry, it is common for a single aircraft to be subjected to several extreme thermal conditions in a relatively short time interval. It is not uncommon for an aircraft to be operated with internal avionics equipment having dynamic temperature ranges of more than 70°C. With the current aspirations for trans-atmospheric aircraft, these extreme vicissitudes in the ambient temperature will continue to confront avionics engineers with perplexing problems of increasing difficulty and importance.

One particular problem that is exacerbated by these temperature oscillations is the continual change of contrast and brightness of liquid crystal displays during take-off and landing of an airplane. Typically, the transmittance versus voltage curve of a particular liquid crystal display is a function of the temperature of the liquid crystal material and, to some degree, a function of the age of the liquid crystal material. The transmittance versus voltage curve characteristics for liquid crystal displays are extremely important when grey scaling is attempted. The voltage across the liquid crystal material which is necessary to produce a predetermined level of transmittance of light through the liquid crystal material can vary widely over the typical operating temperature range of a display. This creates a situation where the contrast and brightness of the display are constantly changing, with a concomitant loss of information which is provided by the gray scale.

One method of controlling the brightness of a display is disclosed in U.S. Patent US-A-4,114,366 to Carl H. Renner et al entitled "Digital Brightness Control". This known brightness control system provides for a light sensor which measures the ambient light intensity and generates an analog signal to regulate a display. While this known method can assist in controlling the brightness of a display it suffers from serious drawbacks. The predominant drawback of such a brightness control system is that the brightness of a display is a function of the sensed ambient light intensity, and there is no control over the varying light transmittance through the liquid crystal material at a given voltage as a function of temperature, and therefore it does not eliminate the loss of gray scale information.

In US-A-4 319 237 there is described a brightness adjusting circuit for a liquid crystal matrix panel in which one electrode of each liquid crystal cell is connected to a common electrode that is supplied with a DC voltage that is varied with temperature by the use of a temperature sensitive resistor in a voltage dividing circuit. Hence the manner in which the brightness of the panel varies with ambient temperature depends on the characteristics of the temperature sensitive resistor.

A need exists for an improved apparatus for controlling the brightness and contrast of a liquid crystal display over a wide range of temperatures.

It is an object of the present invention to provide a display with improved gray scaling capability over a wide temperature range.

According to the present invention, the display apparatus of the kind defined hereinbefore at the beginning, in which the display image is formed by light transmitted through a display panel and in which gray scale levels of the image are produced according to the voltage levels across the panel, is characterised by:
(a) means for producing a predetermined light level and transmitting it through the panel;
(b) means for sensing the light transmitted through the panel and producing a signal representative thereof; and
(c) means for monitoring in real time the said signal representative of light transmitted through the panel at various voltages applied across the panel and utilizing the said signal in adjusting in real time the gray scale levels of the panel.

A preferred embodiment of the present invention includes a light sensor which monitors the actual transmittance of light through a liquid crystal panel as a function of the voltage across the liquid crystal material of the panel.

The preferred embodiment provides a direct parameter monitoring function in the sense that the transmittance through the liquid crystal material, as a function of voltage, is continuously determined and compared over time to determine any variations in the transmittance and voltage characteristic. The light sensor senses the actual light transmitted through the liquid crystal material and a microprocessor comparator monitors and compares the transmittance versus voltage characteristics in real time.

The means for producing a predetermined light level may in the preferred embodiment comprise a light emitting diode disposed on a first face of the liquid crystal panel. The means for sensing the light transmitted through the liquid crystal panel may comprise a photo diode disposed on the opposite face of the panel with respect to the light emitting diode. The means for generating various voltages across the liquid crystal panel may comprise means for generating a series of different voltages across the liquid crystal panel for producing different transmittance levels through the liquid crystal panel.

A preferred embodiment of the invention may take the form of display apparatus having a liquid crystal display panel which operates in an environment with temperature variations, comprising:
means for generating a series of different voltages across the liquid crystal material in the panel for creating variable transmittance therethrough;
characterised by
(a) the liquid crystal panel having predetermined dimensional characteristics and a first face and a second face;
(b) a light emitting diode disposed on the first face of the liquid crystal panel for generating a predetermined light level to be transmitted through the liquid crystal panel;
(c) a photo conductor disposed on the second face of the liquid crystal panel for generating a signal in response to the light incident thereon from said diode;
(d) means for comparing the photo conductor output for a plurality of the voltages across the panel;
(e) means for determining the relationship between the variable voltages and the photo conductor output; and
(f) means for adjusting gray scales in real time in response to the relationship between the variable voltages and the signal generated by the photoconductor.

A preferred embodiment of the invention employs a microprocessor for manipulating the gray scale voltage levels in liquid crystal displays, in order to provide for enhanced image quality, over temperature extremes by monitoring the actual transmittance through the liquid crystal material over time and comparing the information with earlier information.

The invention will now be described by way of example with reference to the accompanying drawings, wherein:
Fig. 1 is a schematic representation of a display device which shows the positioning of several light sensors in the corners of the display device.
Fig. 2 is a graphic representation of a typical transmittance versus voltage graph for a particular liquid crystal display with the several curves representing the transmittance versus voltage characteristics at several different but constant temperatures.
Fig. 3 is a schematic diagram of an embodiment of the present invention which provides for the monitoring and comparing over time of the actual light transmittance through a liquid crystal panel as a function of voltage.

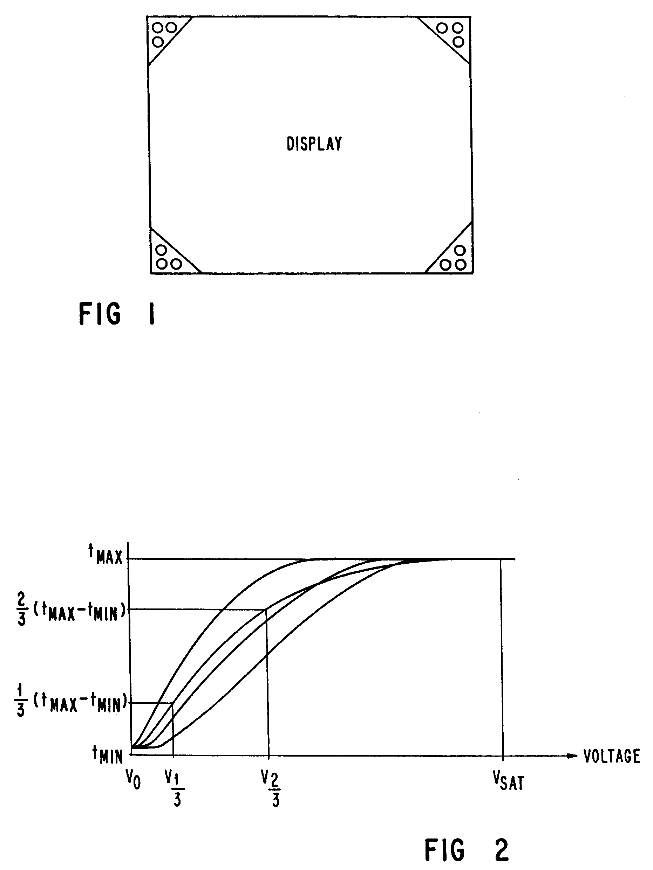

In the drawings, Figure 1 shows a display device, which may be a liquid crystal display. In the preferred embodiment of the present invention, which utilizes a liquid crystal display panel, light sensors are placed in the corners of the diplay panel where they are able to measure the relative brightness which is attenuated by the liquid crystal material during its actual use. In general, each sensor looks through the liquid crystal material at a known light source. This allows the operation in all ambient light levels. The outputs of the sensors correspond to the light transmittance of the liquid crystal material as if it were operated with the varying voltages which are intentionally developed at the corners for this monitoring function. This approach will enhance the predictability of the voltage required to obtain different gray scale levels.

Now referring to Fig. 2 there is shown a series of transmittance versus voltage curves for a given liquid crystal display where each curve represents a different liquid crystal temperature. It can be readily seen that the voltage across the liquid crystal material which is necessary to produce a certain predetermined transmittance level varies greatly depending upon the temperature of the liquid crystal material.

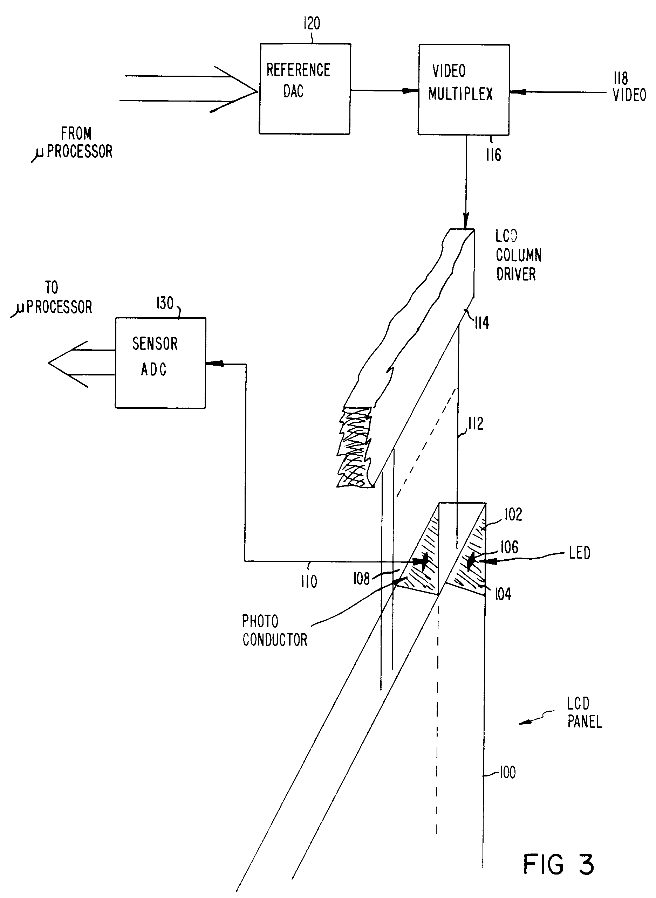

Figure 3 shows an apparatus of the present invention which includes a liquid crystal display panel 100 having a first corner 102 with light shielding material 104 disposed thereabouts for shielding the viewer from light generated therein. A light emitting diode 106 for generating a light to be transmitted through the liquid crystal material is positioned on a first surface of the liquid crystal display panel 100 while on the opposite surface is located a photo conductor 108 which is connected by line 110 to a sensor analog-to-digital converter 130. A microprocessor, not shown, is used to control a reference digital-to-analog converter 120 for generating a varying voltage signal for application to the liquid crystal display. This varying voltage signal is input into a video multiplexer 116 where a video signal 118 is combined with it before being output to a liquid crystal display column driver 114 which performs the function of delivering the variable voltages for controlling the liquid crystal display. In operation, the microprocessor (not shown), in combination with the video multiplexer 116 and the LCD column drivers develops a series of different voltages across the liquid crystal display panel 100.

The photo conductor 108 measures the actual light received from the light emitting diode 106 which is transmitted through the liquid crystal display panel 100. The photo conductor signal on line 110 for each of the varying voltage levels is converted by the converter 130 and then monitored and compared by the microprocessor so that a determination of the actual transmittance versus voltage characteristic is carried out in real time.

As the temperature of the liquid crystal display panel 100 changes, the transmittance through the liquid crystal material of the light produced by the light emitting diode 106 changes so that the signals produced by the photo conductor 108 change. This information is utilized by the microprocessor to determine the actual transmittance to voltage characteristic for the liquid crystal display panel at any given time and is utilized therein for setting the voltage levels for the gray scale.

The embodiment of Fig. 3 operates to improve the image quality of the liquid crystal display which operates in environments having temperature variations, by a method comprising the steps of:
(a) determing the transmittance through the liquid crystal panel (100) as a function of voltage; and
(b) adjusting predetermined gray scale voltage levels in response to the transmittance as a function of voltage determination.

In the apparatus, the light emitting diode 106 serves as a means for producing the predetermined light level and the photoconductor 108 as a means for sensing the light transmitted through the liquid crystal panel. The microprocessor, operating through the DAC 120, multiplexer 116 and driver 114, acts as a means for controlling the voltage across the liquid crystal panel; and, by input through the ADC 130, as a means for monitoring the light transmitted through the liquid crystal panel as a function of the voltage across the panel. The microprocessor futhermore, through units 120, 116, and 114 acts as a means for controlling the gray scale levels.

In operation, generating a series of different voltages across the liquid crystal panel produces different transmittance levels through the liquid crystal panel.

It will be appreciated that, at the corner of the panel 100 represented in Fig. 3, there is a liquid crystal with predetermined dimensional characteristics and having a first side and a second side;
a light emitting diode 106 disposed on the first side of the liquid crystal for generating a predetermined light level to be transmitted through the liquid crystal display.
a photo conductor 108 disposed on the second surface of the liquid crystal for generating a signal in response to the light incident thereon; and
means for generating a series of different voltages across the liquid crystal for creating variable transmittance therethrough.

The microprocessor compares the photo conductor output for a plurality of the voltages across the panel, and determines the relationship between the variable voltages and the photo conductor output. Hence the microprocessor can manipulate the gray scale voltage levels in the liquid crystal display, in order to provide for enhanced image quality, over temperature extremes by monitoring the actual transmittance through the liquid crystal material over time and comparing the information with earlier information.

## Claims

1. Display apparatus having a display panel which has a brightness versus voltage characteristic which is a function of temperature and in which the display image is formed by light transmitted through the panel, gray scale levels of the image being produced according to voltage levels across the panel; comprising:
means (114) for generating various voltages across the panel (100); characterised by
(a) means (106) for producing a predetermined light level and transmitting it through the panel (100);
(b) means (108) for sensing the light transmitted through the panel (100) and producing a signal representative thereof; and
(c) means for monitoring in real time the said signal representative of light transmitted through the panel (100) at various voltages applied across the panel (100) and utilizing the said signal in adjusting in real time the gray scale levels of the panel (100).

2. Display apparatus according to Claim 1, characterised in that the means for producing a predetermined light level further comprises a light emitting diode (106) disposed on a first surface of the panel (100).

3. Display apparatus according to Claim 2, characterised in that the means for sensing the light transmitted through the panel (100) further comprises a photo diode (108) disposed opposite to the light emitting diode (106).

4. Display apparatus according to Claim 3, characterised in that the means (114) for generating various voltages across the panel (100) further comprises
means for generating a series of different voltages across the panel (100) for producing different transmittance levels through the panel (100).

5. Display apparatus having a liquid crystal display panel which operates in an environment with temperature variations, comprising:
means for generating a series of different voltages across the liquid crystal material in the panel (100) for creating variable transmittance therethrough; characterised by
(a) the liquid crystal panel (100) having predetermined dimensional characteristics and a first face and a second face;
(b) a light emitting diode (106) disposed on the first face of the liquid crystal panel for generating a predetermined light level to be transmitted through the liquid crystal panel (100);
(c) a photo conductor (108) disposed on the second face of the liquid crystal panel for generating a signal in response to the light incident thereon from said diode (106);
(d) means for comparing the photo conductor output for a plurality of the voltages across the panel (100);
(e) means for determining the relationship between the variable voltages and the photo conductor ouput; and
(f) means for adjusting the gray scales in real time in response to the relationship between the variable voltages and the signal generated by the photoconductor (108).

## Patentansprüche

1. Anzeigevorrichtung mit einer Anzeigeplatte, die eine Kennlinie Helligkeit über Spannung besitzt, welche eine Funktion der Temperatur ist, und wobei das Anzeigebild mit durch die Platte durchgelassenem Licht gebildet wird und Graustufen des Bildes entsprechend den Spannungspegeln an der Platte erzeugt werden;
mit Mitteln (114) zum Erzeugen verschiedener Spannungen an der Platte (100); gekennzeichnet durch
(a) Mittel (106) zum Erzeugen einer vorbestimmten Lichtstärke und Übertragung derselben durch die Platte (100);
(b) Mittel (108) zum Messen des durch die Platte (100) durchgelassenen Lichts und Erzeugen eines dasselbe darstellenden Signals; und
(c) Mittel zum Echtzeit-Überwachen des besagten, das durch die Platte (100) durchgelassenen Lichts darstellenden Signale bei verschiedenen an die Platte (100) angelegten Spannungen und Verwenden des besagten Signale bei der Echtzeit-Einstellung der Graustufen der Platte (100).

2. Anzeigevorrichtung nach Anspruch 1, dadurch gekennzeichnet, daß das Mittel zum Erzeugen einer vorbestimmten Lichtstärke weiterhin eine auf einer ersten Oberfläche der Platte (100) angeordnete Leuchtdiode (106) umfaßt.

3. Anzeigevorrichtung nach Anspruch 2, dadurch gekennzeichnet, daß das Mittel zum Messen des durch die Platte (100) durchgelassenen Lichts weiterhin eine der Leuchtdiode (106) gegenüber angeordnete Photodiode (108) umfaßt.

4. Anzeigevorrichtung nach Anspruch 3, dadurch gekennzeichnet, daß das Mittel (114) zum Erzeugen verschiedener Spannungen an der Platte (100) weiterhin Mittel zum Erzeugen einer Reihe verschiedener Spannungen an der Platte (100) zum Erzeugen unterschiedlicher Durchlässigkeitsgrade durch die Platte (100) umfaßt.

5. Anzeigevorrichtung mit einer Flüssigkristall-Anzeigeplatte, die in einer Umgebung mit Temperaturschwankungen betrieben wird;
mit Mitteln zum Erzeugen einer Reihe unterschiedlicher Spannungen an dem Flüssigkristallmaterial in der Platte (100) zum Erzeugen einer veränderlichen Durchlässigkeit durch dieselbe; gekennzeichnet durch
(a) die Flüssigkristallplatte (100) mit vorbestimmten Maßeigenschaften und einer ersten Fläche und einer zweiten Fläche;
(b) eine auf der ersten Fläche der Flüssigkristallplatte zum Erzeugen einer vorbestimmten, durch die Flüssigkristallplatte (100) durchzulassende Lichtstärke angeordnete Leuchtdiode (106);
(c) einen auf der zweiten Fläche der Flüssigkristallplatte zum Erzeugen eines Signals als Reaktion auf das von der besagten Diode (106) auf diese einfallende Licht angeordneten Photoleiter (108);
(d) Mittel zum Vergleichen der Photoleiterausgabe für eine Mehrzahl von Spannungen an der Platte (100);
(e) Mittel zum Bestimmen des Verhältnisses zwischen den veränderlichen Spannungen und der Photoleiterausgabe; und
(f) Mittel zum Verstellen der Graustufen in Echtzeit als Reaktion auf das Verhältnis zwischen den veränderlichen Spannungen und dem durch den Photoleiter (108) erzeugten Signal.

## Revendications

1. Appareil d'affichage ayant un panneau d'affichage qui a une caractéristique de la luminosité en fonction de la tension qui est une fonction de la température et dans lequel l'image d'affichage est formée par la lumière transmise à travers le panneau, des niveaux de l'échelle de gris de l'image étant produits en fonction des niveaux de tension aux bornes du panneau; comprenant:
des moyens (114) pour engendrer diverses tensions aux bornes du panneau (100); caractérisé par
(a) des moyens (106) pour produire un niveau de lumière prédéterminé et pour le transmettre à travers le panneau (100);
(b) des moyens (108) pour détecter la lumière transmise à travers le panneau (100) et pour produire un signal représentatif de celle-ci; et
(c) des moyens pour contrôler en temps réel ledit signal représentatif de la lumière transmise à travers le panneau (100) pour diverses tensions appliquées aux bornes du panneau (100) et utiliser ledit signal pour régler en temps réel les niveaux de l'échelle de gris du panneau (100).

2. Appareil d'affichage selon la revendication 1, caractérisé en ce que les moyens pour produire un niveau de lumière prédéterminé comportent en outre une diode (106) émettrice de lumière disposée sur une première surface du panneau (100).

3. Appareil d'affichage selon la revendication 2, caractérisé en ce que les moyens pour détecter la lumière transmise à travers le panneau (100) comportent en outre une photodiode (108) disposée à l'opposé de la diode (106) émettrice de lumière.

4. Appareil d'affichage selon la revendication 3, caractérisé en ce que les moyens (114) pour engendrer diverses tensions aux bornes du panneau (100) comportent en outre des moyens pour engendrer une série de tensions différentes aux bornes du panneau (100) afin de produire différents niveaux de transmittance à travers le panneau (100).

5. Appareil d'affichage ayant un panneau d'affichage à cristaux liquides qui fonctionne dans un environnement avec des variations de température, comprenant:
des moyens pour engendrer une série de tensions différentes aux bornes du matériau à cristaux liquides dans le panneau (100) afin de créer dans celui-ci une transmittance variable; caractérisé par
(a) le fait que le panneau à cristaux liquides (100) a des caractéristiques dimensionnelles prédéterminées et une première face et une seconde face;
(b) une diode (106) émettrice de lumière est disposée sur la première face du panneau a cristaux liquides pour engendrer un niveau de lumière prédéterminé à transmettre à travers le panneau à cristaux liquides (100);
(c) un photoconducteur (108) est disposé sur la seconde face du panneau à cristaux liquides pour engendrer un signal en réponse à la lumière incidente sur celui-ci en provenance de ladite diode (106);
(d) des moyens pour comparer la sortie du photoconducteur pour une pluralité des tensions aux bornes du panneau (100);
(e) des moyens pour déterminer la relation entre les tensions variables et la sortie du photoconducteur; et
(f) des moyens pour régler les échelles de gris en temps réel en réponse à la relation entre les tensions variables et le signal engendré par le photoconducteur (108).
